# EUROPEAN PATENT APPLICATION

(11) **EP 4 793 818 A1**
(43) Date of publication of application: **19.08.2026**
(21) Application number: 26158752.1
(22) Date of filing: 16.02.2026
(51) Int. Cl.: G06F 40/30, G06F 40/56

(54) **SYSTEM AND METHOD FOR GENERATING COMPROMISES FROM DIVERGENT POINTS OF VIEW**

(30) Priority: 18.02.2025 US 202563759979 P; 11.04.2025 US 202519177340
(71) Applicant: Toyota Research Institute, Inc., Los Altos, California 94022 (US)
(72) Inventor: BHATTACHARYYA, Sumanta, Los Altos, 94022 (US); CHEN, Francine R., Los Altos, 94022 (US)
(74) Representative: D Young & Co LLP

(57) **Abstract**

A method for compromise generation from divergent views is described. The method includes generating, by an initial large language model (LLM), a synthetic dataset involving generated compromises between two points of view. The method also includes predicting, by a similarity model, empathy scores for positive viewpoints toward compromises and negative viewpoints toward compromises of the synthetic dataset. The method further includes refining a dataset of empathetically neutral compromises in response to a feedback process based on the empathy scores and the synthetic dataset. The method also includes aligning an open source LLM toward compromise generation capabilities utilizing the dataset of empathetically neutral compromises based on the refining.

## Description

### BACKGROUND

### Field

Certain aspects of the present disclosure generally relate to machine learning and, more particularly, to a system and method for generating compromises from divergent points of view.

### Background

Recent advances in language understanding have significantly expanded the capabilities of large language models (LLMs). These developments span code comprehension, problem-solving, empathetic response generation, and style-controlled text generation, each adapting to unique task structures to perform these cognitive tasks. Despite LLMs exhibiting exceptional capabilities in cognitive tasks, recent attempts indicate a low correlation between academic performance of LLMs and social intelligence metrics. The distinction between social and academic intelligence in LLMs is fundamental - social intelligence enables models to navigate interpersonal contexts and emotional cues (e.g., the capability of being more empathetic and finding the common ground between differences), while academic intelligence facilitates structured information processing and scholarly output.

In practice, LLMs are pre-trained on massive amounts of text data, which make them academically intelligent. In spite of pre-training on this massive amount of text data, LLMs often lack in tasks involving social intelligence. Given the crucial role of social skills across various domains, it is essential to design different scenarios/tasks to evaluate LLMs or incorporate the skill into an LLM. Recent findings, including behavioral intelligence from a first-person perspective, suggest LLMs exhibit significant performance gaps particularly in complex, interactive, and goal-driven social contexts. From behavioral science, it is recognized that a system and method for generating compromises from two points of view is desired.

### SUMMARY

A method for compromise generation from divergent views is described. The method includes generating, by an initial large language model (LLM), a synthetic dataset involving generated compromises between two points of view. The method also includes predicting, by a similarity model, empathy scores for positive viewpoints toward compromises and negative viewpoints toward compromises of the synthetic dataset. The method further includes refining a dataset of empathetically neutral compromises in response to a feedback process based on the empathy scores and the synthetic dataset. The method also includes aligning an open source LLM toward compromise generation capabilities utilizing the dataset of empathetically neutral compromises based on the refining.

A non-transitory computer-readable medium having program code recorded thereon for compromise generation from divergent views is described. The program code is executed by a processor. The non-transitory computer-readable medium includes program code to generate, by a proprietary large language model (LLM), a synthetic dataset involving generated compromises between two points of view. The non-transitory computer-readable medium also includes program code to predict, by a similarity model, empathy scores for positive viewpoints toward compromises and negative compromises of the synthetic dataset. The non-transitory computer-readable medium further includes program code to refine a dataset of empathetically neutral compromises in response to a feedback process based on the empathy scores and the synthetic dataset. The non-transitory computer-readable medium also includes program code to align an open source LLM toward compromise generation capabilities utilizing the dataset of empathetically neutral compromises based on the program code to refine.

A system for compromise generation from divergent views is described. The system includes a synthetic dataset generation model to generate, by a proprietary large language model (LLM), a synthetic dataset involving generated compromises between two points of view. The system also includes an empathy similarity score model to predict empathy scores for positive viewpoints toward compromises and negative viewpoints toward compromises of the synthetic dataset. The system further includes a neutral compromise dataset refinement module to refine a dataset of empathetically neutral compromises in response to a feedback process based on the empathy scores and the synthetic dataset. The system also includes an alignment module to align an open source LLM toward compromise generation capabilities utilizing the dataset of empathetically neutral compromises once refined.

This has outlined, rather broadly, the features and technical advantages of the present disclosure in order that the detailed description that follows may be better understood. Additional features and advantages of the present disclosure will be described below. It should be appreciated by those skilled in the art that this present disclosure may be readily utilized as a basis for modifying or designing other structures for carrying out the same purposes of the present disclosure. It should also be realized by those skilled in the art that such equivalent constructions do not depart from the teachings of the present disclosure as set forth in the appended claims. The novel features, which are believed to be characteristic of the present disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

The features, nature, and advantages of the present disclosure will become more apparent from the detailed description set forth below when taken in conjunction with the drawings in which like reference characters identify correspondingly throughout.
FIGURE 1 illustrates an example implementation of designing a neural network using a system-on-a-chip (SOC) of a compromise generation system, according to aspects of the present disclosure.
FIGURE 2 is a block diagram illustrating an exemplary software architecture that may modularize artificial intelligence (AI) functions for a compromise generation system, according to aspects of the present disclosure.
FIGURE 3 is a diagram illustrating a hardware implementation for a compromise generation system, according to aspects of the present disclosure.
FIGURES 4A and 4B illustrate a data point as well as an overview of a data collection process, according to various aspects of the present disclosure.
FIGURES 5A and 5B are flowcharts illustrating prompt engineering strategies for a candidate compromise generation process, according to various aspects of the present disclosure.
FIGURE 6 is a block diagram illustrating a chain of thought (CoT) and similarity model feedback process for generating empathically neural compromises, according to various aspects of the present disclosure.
FIGURE 7 is a flowchart illustrating a method compromise generation from divergent views, according to aspects of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. It will be apparent to those skilled in the art, however, that these concepts may be practiced without these specific details. In some instances, well-known structures and components are shown in block diagram form in order to avoid obscuring such concepts.

Based on the teachings, one skilled in the art should appreciate that the scope of the present disclosure is intended to cover any aspect of the present disclosure, whether implemented independently of or combined with any other aspect of the present disclosure. For example, an apparatus may be implemented, or a method may be practiced using any number of the aspects set forth. In addition, the scope of the present disclosure is intended to cover such an apparatus or method practiced using other structure, functionality, or structure and functionality in addition to, or other than the various aspects of the present disclosure set forth. It should be understood that any aspect of the present disclosure disclosed may be embodied by one or more elements of a claim.

Although particular aspects are described herein, many variations and permutations of these aspects fall within the scope of the present disclosure. Although some benefits and advantages of the preferred aspects are mentioned, the scope of the present disclosure is not intended to be limited to particular benefits, uses, or objectives. Rather, aspects of the present disclosure are intended to be broadly applicable to different technologies, system configurations, networks, and protocols, some of which are illustrated by way of example in the figures and in the following description of the preferred aspects. The detailed description and drawings are merely illustrative of the present disclosure, rather than limiting the scope of the present disclosure being defined by the appended claims and equivalents thereof.

Recent advances in language understanding have significantly expanded the capabilities of large language models (LLMs). These developments span code comprehension, problem-solving, empathetic response generation, and style-controlled text generation, each adapting to unique task structures to perform these cognitive tasks. Despite LLMs exhibiting exceptional capabilities in cognitive tasks, recent attempts indicate a low correlation between academic performance of LLMs and social intelligence metrics. The distinction between social and academic intelligence in LLMs is fundamental - social intelligence enables models to navigate interpersonal contexts and emotional cues (e.g., the capability of being more empathetic and finding the common ground between differences), while academic intelligence facilitates structured information processing and scholarly output.

Social intelligence, fundamental to human cognition, remains a challenge for LLMs despite their advanced text generation capabilities. While LLMs excel in academic tasks, they show significant limitations in social intelligence. Similar limitations appear in interactive gaming contexts, where LLMs perform substantially below human baseline in theory of mind tasks. Studies from first-person perspective confirm that despite possessing basic theory of mind capabilities, LLMs show considerable limitations in managing complex social interactions compared to human performance. Current evaluation methods include traditional psychological assessments and specialized datasets.

In practice, LLMs are pre-trained on massive amounts of text data, which make them academically intelligent. In spite of pre-training on this massive amount of text data, LLMs often lack in tasks involving social intelligence. Given the crucial role of social skills across various domains, it is essential to design different scenarios/tasks to evaluate LLMs or incorporate the skill into an LLM. Recent findings, including behavioral intelligence from a first-person perspective, suggest LLMs exhibit significant performance gaps particularly in complex, interactive, and goal-driven social contexts. From behavioral science, it is recognized that a system and method for generating compromises from divergent points of view is desired.

Various aspects of the present disclosure are directed to synthetic formation of a benchmark/dataset that deals with compromise generation (empathetically neutral) from two divergent views. Various aspects of the present disclosure are directed to a framework for generating these empathically neutral compromises between opposing viewpoints to address this limitation. In some implementations, compromise generation methods are developed using a dataset of contrasting views from human participants. To overcome data collection constraints, various aspects of the present disclosure prompt engineering with an LLM to generate a synthetic dataset of compromises, validated through a participant user study.

Various aspects of the present disclosure utilize the noted prompt engineering, which is informed by an empathic similarity of two viewpoints towards a candidate compromise for generation of the synthetic data. In some implementations, a trained model is aligned using various different strategies: (1) noise contrastive estimation (NCE)-based alignment and (2) task metric-based objective alignment. Models trained on this dataset via preference alignment demonstrated effective compromise generation across multiple metrics. Additionally, various aspects of the present disclosure provide a scalable approach to enhance social intelligence of LLMs through neutral conflict resolution.

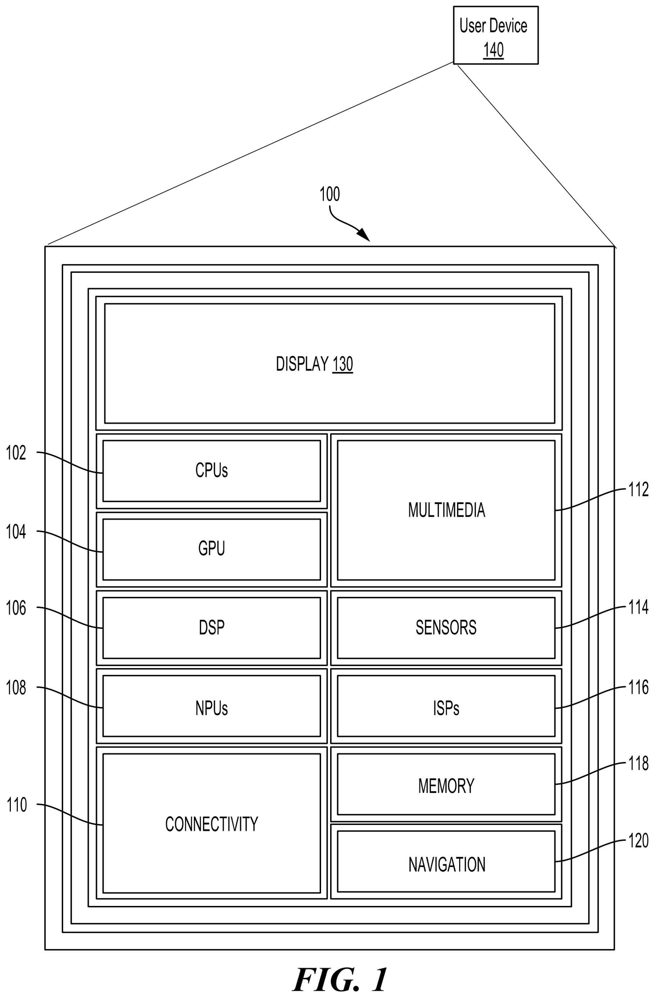

FIGURE 1 illustrates an example implementation of the aforementioned system and method for a compromise generation system using a system-on-a-chip (SOC) 100, according to aspects of the present disclosure. The SOC 100 may include a single processor or multi-core processors (e.g., a central processing unit (CPU) 102), in accordance with certain aspects of the present disclosure. Variables (e.g., neural signals and synaptic weights), system parameters associated with a computational device (e.g., neural network with weights), delays, frequency bin information, and task information may be stored in a memory block. The memory block may be associated with a neural processing unit (NPU) 108, a CPU 102, a graphics processing unit (GPU) 104, a digital signal processor (DSP) 106, a dedicated memory block 118, or may be distributed across multiple blocks. Instructions executed at a processor (e.g., CPU 102) may be loaded from a program memory associated with the CPU 102 or may be loaded from the dedicated memory block 118.

The SOC 100 may also include additional processing blocks configured to perform specific functions, such as the GPU 104, the DSP 106, and a connectivity block 110, which may include sixth generation (6G) cellular network technology, fifth generation (5G) new radio (NR) technology, fourth generation long term evolution (4G LTE) connectivity, unlicensed WiFi connectivity, USB connectivity, Bluetooth^{®} connectivity, and the like. In addition, a multimedia processor 112 in combination with a display 130 may, for example, apply a temporal component of a current traffic state to select a vehicle safety action, according to the display 130 illustrating a view of a vehicle. In some aspects, the NPU 108 may be implemented in the CPU 102, DSP 106, and/or GPU 104. The SOC 100 may further include a sensor processor 114, image signal processors (ISPs) 116, and/or navigation 120, which may, for instance, include a global positioning system.

In some aspects, the NPU 108 may be implemented in the CPU 102, DSP 106, and/or GPU 104. The SOC 100 may further include a sensor processor 114, image signal processors (ISPs) 116, and/or navigation 120, which may, for instance, include a global positioning system. The SOC 100 may be based on an Advanced Risc Machine (ARM) instruction set, RISC-V, or any reduced instruction set computing (RISC) architecture, or the like. In another aspect of the present disclosure, the SOC 100 may be a server computer in communication with a user device 140. In this arrangement, the user device 140 may include a processor and other features of the SOC 100.

In various aspects of the present disclosure, instructions loaded into a processor (e.g., the CPU 102) or the NPU 108 of the user device 140 may include code to generate compromises between divergent views. The instructions loaded into a processor (e.g., the NPU 108) may also include code to generate, by a proprietary large language model, a synthetic dataset involving compromise generation between two divergent views. The instructions loaded into a processor (e.g., the NPU 108) may also include code to generate, by a similarity model, empathy scores for positive viewpoints toward compromises and negative viewpoints toward compromises of the synthetic dataset.

Additionally, the instructions loaded into a processor (e.g., the NPU 108) may also include code to refine a dataset of empathetically neutral compromises in response to a feedback process based on the empathy scores and the synthetic dataset. The instructions loaded into a processor (e.g., the NPU 108) may also include code to align a foundational LLM toward compromise generation capabilities utilizing the dataset of empathetically neutral compromises based on the code to refine. For example, the open-source LLM is aligned toward compromise generation capabilities utilizing the dataset of empathetically neutral compromises.

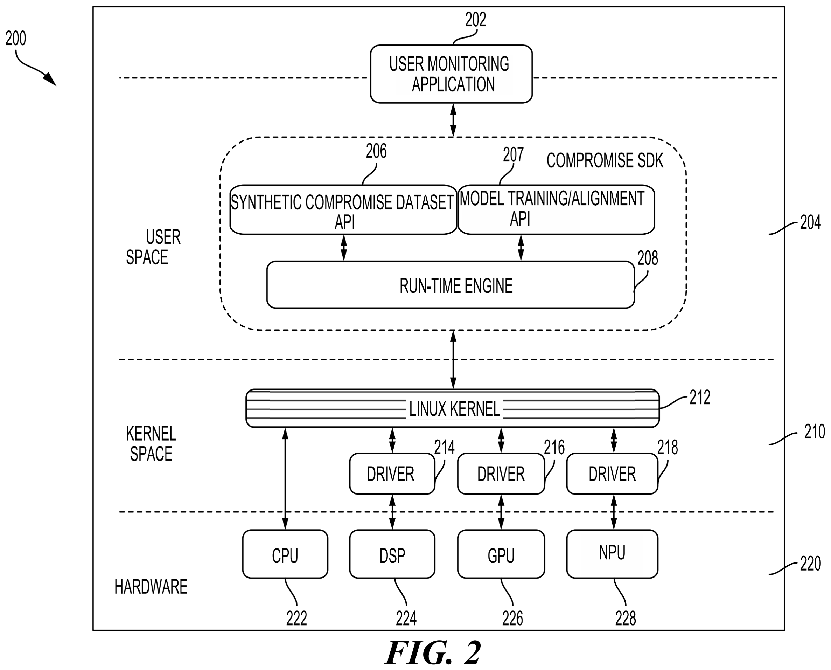

FIGURE 2 is a block diagram illustrating a software architecture 200 that may modularize artificial intelligence (AI) functions for a compromise generation system, according to aspects of the present disclosure. Using the software architecture 200, a user monitoring application 202 may be designed such that it may cause various processing blocks of a system-on-a-chip (SOC) 220 (for example a CPU 222, a DSP 224, a GPU 226, and/or an NPU 228) to perform supporting computations during run-time operation of the user monitoring application 202. FIGURE 2 describes the software architecture 200 for a compromise generation system, it should be recognized that a compromise generation system is not limited to different views. According to aspects of the present disclosure, a compromise generation functionality is applicable to any type of user activity between different individuals, such as the young and the older generations.

The user monitoring application 202 may be configured to call functions defined in a user space 204 that may, for example, provide for a compromise generation. The user monitoring application 202 may make a request for compiled program code associated with a library defined in a synthetic compromise dataset application programming interface (API) 206. The synthetic compromise dataset API 206 is configured to generate, by a proprietary large language model (LLM), a synthetic dataset involving compromise generation between two divergent views. In addition, the compiled program code of the synthetic compromise dataset API 206 is configured to generate, by a similarity model, empathy scores for positive viewpoints toward compromises and negative viewpoints toward compromises of the synthetic dataset.

In response, the compiled program code of a model training/alignment API 207 is configured to refine a dataset of empathetically neutral compromises in response to a feedback process based on the empathy scores and the synthetic dataset. Additionally, the compiled program code of the model training/alignment API 207 is configured to code to refine a dataset of empathetically neutral compromises in response to a feedback process based on the empathy scores and the synthetic dataset. The model training/alignment API 207 is configured to align an open source LLM toward compromise generation capabilities utilizing the dataset of empathetically neutral compromises based on the code to refine. For example, the open source LLM may be a fine-tuned foundational LLM aligned toward compromise generation capabilities utilizing the dataset of empathetically neutral compromises. Once fine-tuned and aligned, the open source LLM is configured to generate compromises between divergent viewpoints.

A run-time engine 208, which may be compiled code of a run-time framework, may be further accessible to the user monitoring application 202. The user monitoring application 202 may cause the run-time engine 208, for example, to take actions for generating a compromise between a first user regarding an idea of a second user based on a perspective determined for the first user. The run-time engine 208 may in turn send a signal to an operating system 210, such as a Linux Kernel 212, running on the SOC 220. FIGURE 2 illustrates the Linux Kernel 212 as software architecture for empathy prediction based on user stories. It should be recognized, however, that aspects of the present disclosure are not limited to this exemplary software architecture. For example, other kernels may provide the software architecture to support the compromise generation functionality.

The operating system 210, in turn, may cause a computation to be performed on the CPU 222, the DSP 224, the GPU 226, the NPU 228, or some combination thereof. The CPU 222 may be accessed directly by the operating system 210, and other processing blocks may be accessed through a driver, such as drivers 214-218 for the DSP 224, for the GPU 226, or for the NPU 228. In the illustrated example, the deep neural network may be configured to run on a combination of processing blocks, such as the CPU 222 and the GPU 226, or may be run on the NPU 228, if present.

Social intelligence, fundamental to human cognition, remains a challenge for large language models (LLM)s despite their advanced text generation capabilities. While LLMs excel in academic tasks, they show significant limitations in social intelligence. Similar limitations appear in interactive gaming contexts, where LLMs perform substantially below human baseline in theory of mind tasks. Studies from first-person perspective confirm that despite possessing basic theory of mind capabilities, LLMs show considerable limitations in managing complex social interactions compared to human performance. Current evaluation methods include traditional psychological assessments and specialized datasets.

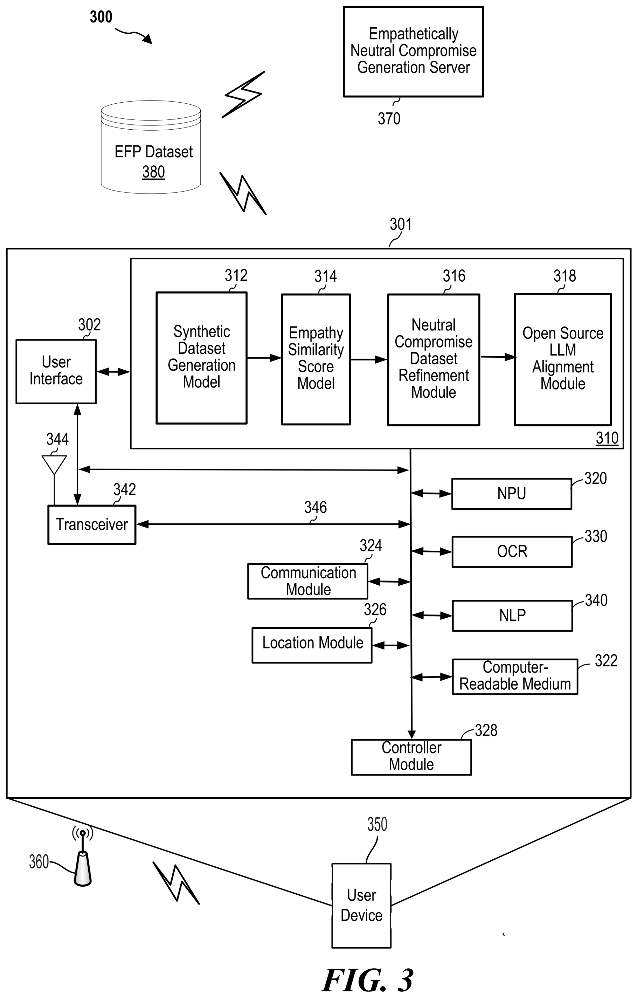

In practice, LLMs are pre-trained on massive amounts of text data, which make them academically intelligent. In spite of pre-training on this massive amount of text data, LLMs often lack in tasks involving social intelligence. Given the crucial role of social skills across various domains, it is essential to design different scenarios/tasks to evaluate LLMs or incorporate the skill into an LLM. Recent findings, including behavioral intelligence from a first-person perspective, suggest LLMs exhibit significant performance gaps particularly in complex, interactive, and goal-driven social contexts. From behavioral science, it is recognized that a system and method for generating compromises from divergent points of view is desired. Compromise generation may be performed, for example, as shown in FIGURE 3.

FIGURE 3 is a diagram illustrating a hardware implementation for a compromise generation system 300, according to aspects of the present disclosure. The compromise generation system 300 may be configured to generate empathy neutral compromises based on different viewpoints. The compromise generation system 300 is configured to generate, using a large language model (LLM), a synthetic dataset involving compromise generation between two divergent views. In addition, the compromise generation system 300 is configured to generate, using a similarity model, empathy scores for positive viewpoints toward compromises and negative viewpoints toward compromises of the synthetic dataset. The compromise generation system 300 is further configured to generate, using the LLM, a dataset of an empathetically neutral compromise in response to a chain of thoughts (CoT) feedback process including the empathy scores. In response, the compromise generation system 300 is configured to align a fine-tuned open-source LLM toward compromise generation capabilities utilizing the dataset of the empathetically neutral compromises.

The compromise generation system 300 includes a user monitoring system 301 and an empathetically neutral compromise generation server 370 in this aspect of the present disclosure. The user monitoring system 301 may be a component of a user device 350. The user device 350 may be a cellular phone (e.g., a smart phone), a personal digital assistant (PDA), a wireless modem, a wireless communications device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a global positioning system device, or any other suitable device that is configured to communicate via a wireless or wired medium.

The empathetically neutral compromise generation server 370 may connect to the user device 350 for performing a compromise generation process developed using a dataset of contrasting views from human participants (e.g., from the user device 350). To overcome data collection constraints, the empathetically neutral compromise generation server 370 performs prompt engineering with an LLM to generate a synthetic dataset of compromises, validated through a participant user study. In some implementations, an empathy from perspectives (EFP) dataset 380 is utilized to enable prediction of empathy scores. For example, the EFP) dataset 380 is based on empathy ratings of real persons with a positive viewpoint towards a negative viewpoint story, which may be helpful for prediction of empathy scores. Various aspects of the present disclosure utilize prompt engineering informed by an empathic similarity of two viewpoints towards a candidate compromise for generation of the synthetic data. In various aspects of the present disclosure, the empathetically neutral compromise generation server 370 trains a similarity model to learn to predict empathy scores between generated compromises relative to opposing views.

The user monitoring system 301 may be implemented with an interconnected architecture, represented generally by an interconnect 346. The interconnect 346 may include any number of point-to-point interconnects, buses, and/or bridges depending on the specific application of the user monitoring system 301 and the overall design constraints. The interconnect 346 links together various circuits including one or more processors and/or hardware modules, represented by a user interface 302, a user activity module 310, a neutral network processor (NPU) 320, a computer-readable medium 322, a communication module 324, a location module 326, a controller module 328, an optical character recognition (OCR) 330, and a natural language processor (NLP) 340. The interconnect 346 may also link various other circuits such as timing sources, peripherals, voltage regulators, and power management circuits, which are well known in the art, and therefore, will not be described any further.

The user monitoring system 301 includes a transceiver 342 coupled to the user interface 302, the user activity module 310, the NPU 320, the computer-readable medium 322, the communication module 324, the location module 326, the controller module 328, the OCR 330, and the NLP 340. The transceiver 342 is coupled to an antenna 344. The transceiver 342 communicates with various other devices over a transmission medium. For example, the transceiver 342 may receive commands via transmissions from a user or the empathetically neutral compromise generation server 370. In this example, the transceiver 342 may receive/transmit information for the user activity module 310 to/from connected devices within the vicinity of the user device 350.

The user monitoring system 301 includes the NPU 320 coupled to the computer-readable medium 322. The NPU 320 performs processing, including the execution of software stored on the computer-readable medium 322 to provide a neural network model for user monitoring and advice recommendation functionality according to the present disclosure. The software, when executed by the NPU 320, causes the user monitoring system 301 to perform the various functions described for presenting a gradually modified digital avatar to the user through the user device 350, or any of the modules (e.g., 310, 324, 326, and/or 328). The computer-readable medium 322 may also be used for storing data that directs the OCR 330 when executing the software to analyze user stories, narratives, and perspectives.

The location module 326 may determine a location of the user device 350. For example, the location module 326 may use a global positioning system (GPS) to determine the location of the user device 350. The location module 326 may implement a dedicated short-range communication (DSRC)-compliant GPS unit. A DSRC-compliant GPS unit includes hardware and software to make the user device 350 and/or the location module 326 compliant with the following DSRC standards, including any derivative or fork thereof: EN 12253:2004 Dedicated Short-Range Communication-Physical layer using microwave at 5.8 GHz (review); EN 12795:2002 Dedicated Short-Range Communication (DSRC)-DSRC Data link layer: Medium Access and Logical Link Control (review); EN 12834:2002 Dedicated Short-Range Communication-Application layer (review); EN 13372:2004 Dedicated Short-Range Communication (DSRC)-DSRC profiles for RTTT applications (review); and EN ISO 14906:2004 Electronic Fee Collection-Application interface.

The communication module 324 may facilitate communications via the transceiver 342. For example, the communication module 324 may be configured to provide communication capabilities via different wireless protocols, such as 5G new radio (NR), Wi-Fi, long term evolution (LTE), 4G, 3G, etc. The communication module 324 may also communicate with other components of the user device 350 that are not modules of the user monitoring system 301. The transceiver 342 may be a communications channel through a network access point 360. The communications channel may include DSRC, LTE, LTE-D2D, mmWave, Wi-Fi (infrastructure mode), Wi-Fi (ad-hoc mode), visible light communication, TV white space communication, satellite communication, full-duplex wireless communications, or any other wireless communications protocol such as those mentioned herein.

The user monitoring system 301 also includes the OCR 330 to analyze user views to determine the narrative and/or perspective (e.g., a first perspective or a second perspective) of the writer of the view. From behavioral science, it is recognized that empathy is "the ability to recognize, understand, and share the thoughts and feelings of another person, animal, or fictional character." Although methods for empathy prediction have been proposed, most prediction is performed assuming that empathy can be predicted without consideration of different perspectives. Often, an aggregate of empathy ratings is used. Unfortunately, people will react with different levels of empathy to a given text passage, based in part on their background and current context. Additionally, stories by others with diverging views about an issue may be ignored or brushed aside because they are substantially different from a reader's own perspective.

Models for empathy prediction are generally developed from data labeled by third parties. For some situations, prediction of the average empathy towards a story, such as a political event, may be desirable; however, for other situations, individual empathy views may be important. Some examples include when negotiating a compromise with a person or comparing different views in hopes of gaining empathy using, for example, large language models (LLMs). Unfortunately, LLMs excel academically but struggle with social intelligence tasks. In particular, while LLMs can produce empathetic responses, their ability to consistently generate neutral compromises are less explored. Such neutrality is crucial in diverse applications including conflict resolution, negotiation support, and collaborative decision making.

As shown in FIGURE 3, the user activity module 310 includes a synthetic dataset generation model 312, an empathy similarity score model 314, a neutral compromise dataset refinement module 316, and an open source LLM alignment module 318. The synthetic dataset generation model 312, the empathy similarity score model 314, the neutral compromise dataset refinement module 316, and the open source LLM alignment module 318 may be components of a same or different artificial neural network, such as a large language model (LLM).

This configuration of the user activity module 310 includes the synthetic dataset generation model 312 configured to perform prompt engineering with a proprietary LLM to generate a synthetic dataset of compromises, validated through a participant user study conducted, for example, using the empathetically neutral compromise generation server 370. The empathy similarity score model 314 is configured to generate, using a trained similarity model, empathy scores for positive viewpoints toward compromises and negative viewpoints toward compromises relative to divergent views of the synthetic dataset. In some implementations, the empathy similarity score model 314 performs computation (e.g., inference/prediction) of empathic similarity between each generated compromise and two views using an iterative process for improving the neutrality of the generated compromise.

In response, the neutral compromise dataset refinement module 316 is configured to refine a dataset of empathetically neutral compromises in response to a feedback process based on the empathy scores from the empathy similarity score model 314 and the and the synthetic dataset from the synthetic dataset generation model. In this implementation, the neutral compromise dataset refinement module 316 is configured to refine a dataset of empathetically neutral compromises in response to a feedback process based on the empathy scores and the synthetic data. According to various aspects of the present disclosure, refining is performed to create the synthetic dataset, which could be used if there is no or only a small amount of training data. The alignment is used so that there is control of the model.

Various aspects of the present disclosure utilize prompt engineering informed by an empathic similarity of two viewpoints towards a candidate compromise for generation of the synthetic data. In some implementations, the open source LLM alignment module 318 is configured to align a fine-tuned, open source LLM toward compromise generation capabilities utilizing the dataset of the empathetically neutral compromises.

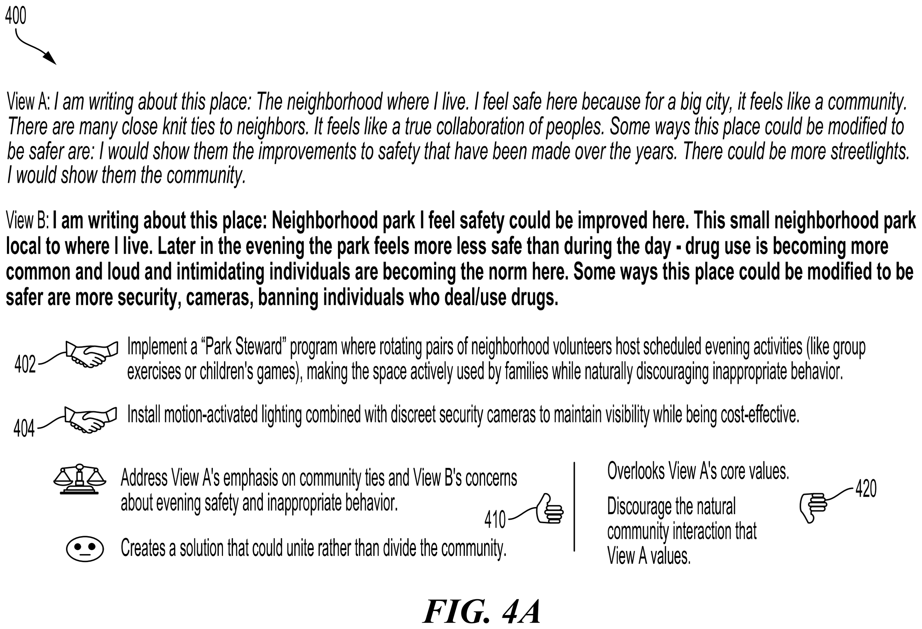

The foundational LLM may undergo fine-tuning and aligning using various different strategies: (1) noise contrastive estimation (NCE)-based alignment and (2) task metric-based objective. Models trained on this dataset via preference alignment demonstrated effective compromise generation across multiple metrics. Additionally, various aspects of the present disclosure provide a scalable approach to enhance social intelligence of LLMs through neutral conflict resolution, for example, as shown in FIGURES 4A-6.

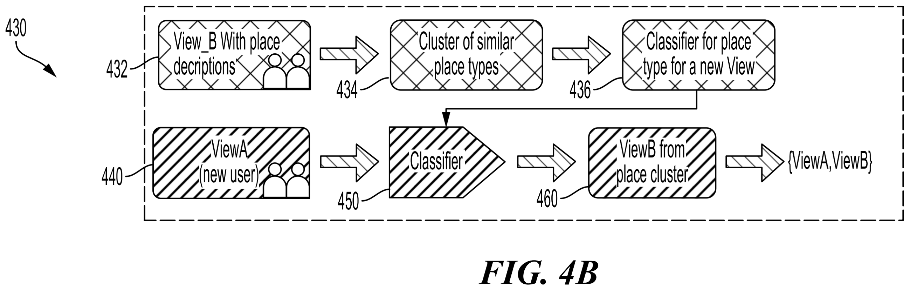

FIGURES 4A and 4B illustrate a data point as well as an overview of a data collection process, according to various aspects of the present disclosure. FIGURE 4A illustrates a data point 400, in which ViewA and ViewB are collected from human participants, while compromises (e.g., candidate compromises) are synthetically generated using prompt engineering that satisfies the criteria of a balanced view and empathetic neutrality.

As shown in FIGURE 4A, views are limited to scenarios in which places are evaluated as safe (ViewA), less safe (ViewB) or welcoming (ViewA), excluded (ViewB). In general, ViewA, ViewB are composed of reasons and suggestions to improve a place based on the evaluation. For instance, for a pair of (safe, less safe) views, ViewA describes the features that make a location safe and suggests potential improvements to enhance its safety, while ViewB identifies the hazards that make a location less safe and proposes measures to address these safety concerns.

A suitable compromise should satisfy and is evaluated based on these two constraints: (i) a degree of consideration of both the suggestions while generating candidate compromises, and (ii) a degree of empathetic neutrality of the candidate compromise. As shown in FIGURE 4A, a first synthetic compromise 402 is generated based on ViewA and ViewB, and a second synthetic compromise 404 is generated based on ViewA and ViewB. A first evaluation 410 of the first synthetic compromise 402 is generally positive and indicates that the first synthetic compromise 402 meets both of the above-noted constraints. By contrast, a second evaluation 420 of the second synthetic compromise 404 is generally negative by failing to meet both of the above-noted constraints.

FIGURE 4A illustrates that while large language models (LLMs) can produce empathetic responses, their ability to consistently generate neutral compromises is lacking. Such neutrality is crucial in diverse applications including conflict resolution, negotiation support, and collaborative decision making. To facilitate robust model training to consistently generate neutral compromises, a corpus of contrasting viewpoints expressed by human participants were collected, for example, as shown in FIGURE 4B.

FIGURE 4B is a block diagram illustrating a process 430 for collecting an empathy from perspectives (EFP) dataset, according to various aspects of the present disclosure. As described, ViewA, ViewB are composed of reasons and suggestions to improve a place based on an evaluation, for a pair (welcoming (ViewA), excluded (ViewB)). In general, ViewA describes the features that make a location safe and suggests potential improvements to enhance its safety, while ViewB identifies the hazards that make a location less safe and proposes measures to address these safety concerns. In some implementations, an EFP dataset (e.g., the EFP dataset 380 shown in FIGURE 3) is collected in two stages. In a first stage, a first set of subjects are recruited, for example, from a first research site to provide ViewBs with place descriptions at block 432.

At block 434, ViewBs having a similar type of place are clustered using, for example, agglomerative clustering. In this implementation, embeddings representing places are clustered and the clusters recorded. In some examples, a known clustering function or classification function may be used to produce the clusters. For example, agglomerative clustering with Ward linkage may be used to generate clusters, where one cluster may be associated with restaurants, another cluster associated with religious institutions, and still another cluster associated with residential housing. At block 436, a classifier is trained to predict a cluster from a new place description in the ViewBs, such as a library.

As shown in FIGURE 4B, the process 430 for collecting the EFP dataset may be utilized to identify ViewBs for which there may be different perspectives. As shown in block 436 identified ViewBs regarding a same type of place are clustered (e.g., using agglomerative clustering). Additionally, ViewBs directed to the welcoming and excluding places are clustered together.

As further illustrated in FIGURE 4B, after a predetermined period of time (e.g., a year later) a second set of subjects is recruited to provide feedback for a second stage. For example, to obtain empathy ratings from divergent perspectives, a second set of participants are recruited from a second research site. As shown at block 440, the new user is asked to provide a ViewA regarding a place that felt either welcoming or safe to them, using the same prompts used to collect the ViewBs at block 432. Next, a place cluster classifier 450 identifies the type of place written about and the one or more views (e.g., ViewBs) for the new user to rate are selected at block 460.

In various aspects of the present disclosure, generation of the place cluster classifier 450 may include training a neural network based on the place descriptions and ViewBs (e.g., block 432), place clusters (e.g., block 434), and embedded features. In some examples, a classification model may be trained to classify new place descriptions. For example, the place descriptions may be given labels such as "restaurant" or "religious institution." The labels may be associated with the clusters generated by the place cluster classifier 450. The model may then be trained based on the labeled dataset of place descriptions. Once trained, the place cluster classifier 450 may implement the model to predict the cluster of a new place description.

As shown in FIGURE 4B, during the first stage, participants provide views (ViewB) about places where they felt unsafe/excluded. For each place, the participants explained their feelings and suggested modifications to improve safety or inclusivity. Place descriptions were grouped into several clusters (e.g., 14 clusters) using, for example, agglomerative clustering of each ViewB for unsafe/excluding places. A classifier was developed to match new views to these clusters. During the second stage, new participants wrote views (ViewA) about places where they felt safe/welcome. The classifier matched each ViewA to a ViewB from the place-type cluster corresponding to ViewA. Participants associated with ViewA also rated their empathy for one, three, or five ViewBs, along with some demographic information. These ratings complete an empathy from perspectives (EFP) dataset, which is further used to train a similarity model, according to various aspects of the present disclosure.

Given the task's complexity and the diversity of viewpoints involved, it is difficult for individuals to neutrally mediate between opposing views without introducing their own unconscious biases (e.g., confirmation bias, social desirability bias, etc.). Rather, various aspects of the present disclosure utilize synthetically generated candidate compromises, which can be aligned with specific needs. Careful implementation of prompt-based controls over the generation process allows creation of more balanced representations of diverse compromises based on the original views. Additionally, a separate similarity model is trained based on empathetic similarity to evaluate empathetic neutrality. In some implementations, the similarity model generates an empathetic similarity rating between the views and a candidate compromise.

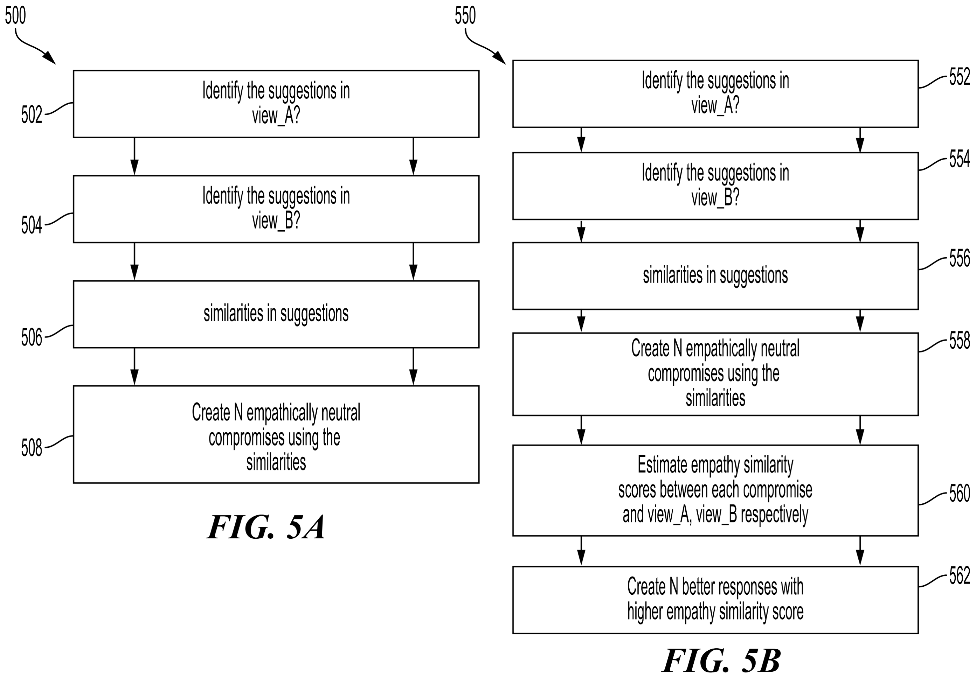

Although predicting the two points of view involves places evaluated as safe/less safe or welcoming/excluded, it should be recognized that aspects of the present disclosure are applicable to other topics where opinions may differ. Some examples include how to improve a plan to build an apartment building so it doesn't affect the privacy of nearby buildings as much; or how to modify a street to partially close it to allow for outdoor dining; or how to remodel a community area can best be utilized for community activities, although other examples are possible. According to various aspects of the present disclosure, candidate compromises that achieve balanced similarity ratings with respect to both views are considered to demonstrate empathetic neutrality, for example, as shown in FIGURES 5A-6.

FIGURES 5A and 5B are flowcharts illustrating prompt engineering strategies for a candidate compromise generation process, according to various aspects of the present disclosure. Various aspect of the present disclosure are directed to generating compromises for each given pair of positive (e.g., ViewAs) and negative views (e.g., ViewBs) for a place. For example, each view (e.g., ViewA/ViewB) is composed of: (i) a place; (ii) a reason; and (iii) suggestions of improvement. In order to utilize this view information as a context for feeding-back into a large language model (LLM), a fixed prompt template is employed. As shown in FIGURE 5A, a fixed prompt template process 500 begins at block 502, a prompt is provided to "identify the suggestions in ViewA." At block 504, a prompt is provided to "identify the suggestions in ViewB." Next, at block 506, a prompt is provided to "identify similarities in the suggestions." Finally, at block 508, a prompt is provided to "Create N empathetically neutral compromises using the similarities in block 506."

Generating desirable candidate compromises is challenging due to inherent human biases. For instance, confirmation bias leads individuals to favor information that supports their existing views, while social desirability bias influences individuals to present socially acceptable responses rather than their true perspective, making truly neutral compromises difficult to achieve. Furthermore, relying on a single compromise as the target may limit a model's generalization capabilities. Therefore, multiple candidate compromises were generated for each view pair to enhance the model's ability to learn diverse resolution patterns, as shown in block 508.

The various prompts provided in FIGURE 5A are input to LLMs for providing synthetic dataset generation. As shown in FIGURE 5A, with the help of sophisticated prompting strategies based on a task scenario, synthetic dataset generation provides an effective alternative to human data collection. As shown in FIGURE 5A, a chain of thoughts (CoT) process is utilized to identify suggestion similarities and derive compromises. Unfortunately, this approach proved ineffective, as it either focused too heavily on a single suggestion or exceeded its scope, resulting in less suitable compromises.

FIGURE 5B illustrates a CoT and LLM enhanced process 550 to improve synthetic compromises generation, according to various aspects of the present disclosure. In this implementation, self-generated LLM feedback is utilized to better align and refine outputs using human refinement techniques that enhance the prompt with LLM-based self-evaluation scores.

As shown in FIGURE 5B, the CoT and LLM enhanced process 550 repeats blocks 502-508 of FIGURE 5A, which are shown as blocks 552-558. At block 560, a prompt is provided to "Estimate empathy similarity scores between each compromise and ViewA and ViewB. In this example, the self-evaluation scores are empathetic similarity ratings generated by the LLM between the generated compromise and ViewA and ViewB. In practice, the high similarity ratings between ViewA and ViewB and the generated compromise are desired, such that a target difference equals zero (0). At block 562, the prompt is provided to "Create N-improved responses with higher empathy similarity scores." In this example, the empathy similarity scores are used to further improve the responses. Unfortunately, while self-evaluation scores improved, compromise quality remained stagnant, suggesting that self-evaluation scores are not a reliable indicator of improving response quality.

While quantitative comparison provides valuable insights for model evaluation, assessing how effective candidate compromises are in practice is critical. Without an existing benchmark/dataset that addresses the compromise generation task, a study based on human subjects is utilized for evaluating compromises generated by different methods. Various aspects of the present disclosure recognize that providing an LLM with an external measure of empathetic similarity to proposed compromises can produce much more acceptable compromises than an LLM generating compromises alone. In some implementations, a disclosed framework demonstrates that despite data scarcity in social intelligence tasks, carefully designed scenarios coupled with prompt engineering for synthetic data generation can unlock new capabilities in LLMs, revealing valuable characteristics that can inform future research directions in enhancing language models' social capabilities.

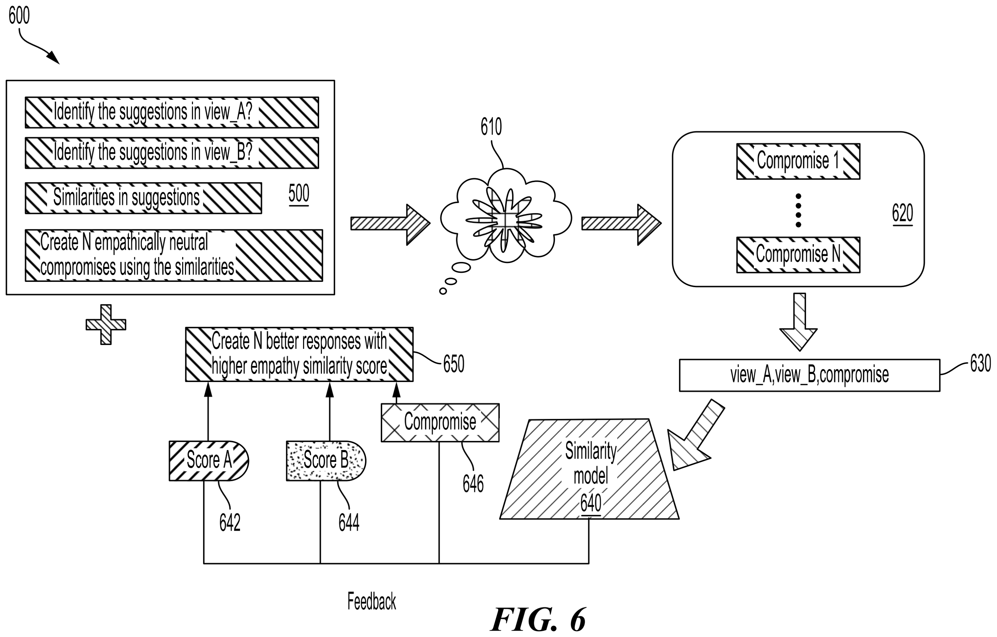

FIGURE 6 is a block diagram illustrating a chain of thoughts (CoT) and similarity model feedback process 600 for generating empathically neutral compromises, according to various aspects of the present disclosure.

As shown in FIGURE 6, rather than relying on the self-evaluation scores, as shown in FIGURE 5B, various aspects of the present disclosure train a similarity model 640 to predict the empathy similarity ratings and generated prompt responses in feedback loop. As shown in FIGURE 6, the fixed prompt template process 500 is provided as a starting point for input to a proprietary LLM 610 to initiate the CoT and similarity model feedback process 600. According to various aspects of the present disclosure, modeling of empathetic similarity is performed by computing a similarity score sim (fθ(s1), fθ(s2)) between story pairs (s1, s2), where the score should be higher for stories with similar empathic content.

In some implementations, the process 430 of FIGURE 4B for collecting an empathy from perspectives (EFP) dataset is utilized for training the similarity model 640. During inference, the similarity model 640 receives an input 630, including ViewA, ViewB and each compromise from the generated compromises block 620. In response, the similarity model 640 predicts the empathic similarity between the generated each generated compromise 646 and ViewA (ScoreA 642) and ViewB (ScoreB 644). This information is fed to the proprietary LLM 610 along with a CoT feedback prompt 650 to "Create N better responses with a higher empathy similarity score."

Various aspects of the represent disclosure recognize that for each iteration of the CoT and similarity model feedback process 600, both response quality and empathy similarity ratings improve. Because the similarity model 640 is trained to mimic human empathic similarity, this external feedback of empathy similarity scores is more valuable to the proprietary LLM 610 rather than the self-evaluation utilized in the CoT and LLM enhanced process 550 of FIGURE 5B. In some implementations, the CoT and similarity model feedback process 600 is repeated until the higher empathy similarity score (e.g., ViewA (ScoreA 642) and ViewB (ScoreB 644)) reaches a predetermined value.

As shown in FIGURES 5A-6, four candidate compromises were generated per view pair for each prompting strategy. Given above-noted description of four distinct prompting strategies (single prompt, CoT, CoT+LLM score, and CoT+Feedback), a total of sixteen (4 × 4 = 16) candidate compromises were collected for each view pair across all strategies. From this set, the top four responses were selected as final candidate compromises based on the disclosed neutrality criteria. In this example, the similarity model 640 was utilized for computing the empathic similarity between the generated compromise and both ViewA and ViewB, which are referred to as ScoreA and ScoreB, respectively. In the ideal scenario of empathic neutrality, the difference between these scores approaches zero:|score A - scoreB| → 0.

**Table 1: Distribution of final responses across all the prompting strategies.**

| **Response Type** | **Single Prompt** | **COT** | **COT+LLM** | **COT+Feedback** |
|---|---|---|---|---|
| Welcome | 0.75% | 24.70% | 28.45% | 46.10% |
| Safe | 0.83% | 22.09% | 26.65% | 50.43% |

Table 1 shows the composition of the final candidate compromises across all the strategies. COT+Feedback contributed the highest number of accepted compromises, while single prompt yielded the lowest, demonstrating the effectiveness of this approach.

Language models can be aligned with preferences through either explicit scalar rewards or implicit rewards learned from preference data, where the reward difference indicates preference probability. Various aspects of the present disclosure perform LLM alignment that ensures learning a policy that enhances the capability of open source pre-trained LLMs towards a compromise generation task. In some implementations, an initial approach includes supervised finetuning of a base model (pre-trained LLM) before applying an alignment method.

After finetuning the base model, the model is aligned with the candidate compromises. Because multiple responses are collected for a fixed pair of views, for each epoch random sampling is performed from this candidate compromise pool to train the model. Various aspects of the present disclosure recognize that training the model with all layers is not beneficial. Rather all layers are frozen, except the last three, such that during alignment the last three layers of the model gets trained in this implementation. Various aspects of the present disclosure utilize a single, fine-tuned base model, while unfreezing the last three layers. ${L}_{nce} = - log \left(\frac{1}{1 + {e}^{- {s}_{target}}}\right) - log \left(\frac{1}{1 + {e}^{{s}_{type}}}\right)$

As shown in Equation 1, we use the sum of log probabilities of the generated tokens as the reward according to a noise contrastive estimation (NCE) loss-based alignment; *s*_{target} and s_{type} are defined as the sum of log probabilities of the candidate compromise tokens and fine-tuned base model's output tokens, respectively. The objective increases the candidate compromise likelihood while decreasing the fine-tuned base model's output likelihood.

Various aspects of the present disclosure ensure that higher likelihood values correspond to samples with higher evaluation scores, by jointly using a task metric with log probability, as shown in Equation (2): ${L}_{tbl} = max \left(0,{s}_{target}-{s}_{hypo}+\left|{target}_{rouge}-{hypo}_{rouge}\right|⋅wmargin\right)$

As shown in Equation (2), target_{rouge} refers to the score of the candidate compromise with respect to the reference text (which is the candidate compromise), while hypo_{rouge}denotes the score of the compromise generated by the fine-tuned base model with respect to the candidate compromise. The weight margin value, wmargin captures the impact of the difference in task-metric alignment loss during training.

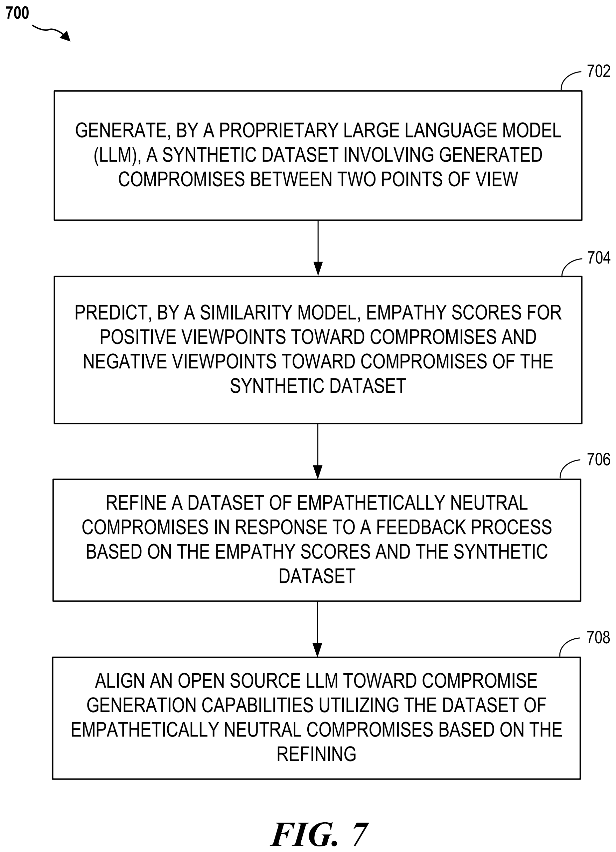

Various aspects of the present disclosure recognize that model alignment can effectively steer LLM behavior toward new tasks while preserving broad generalization capabilities. This insight is leveraged for a compromise generation process, as the pretrained knowledge in existing open-source LLMs provides a valuable foundation. Some implementations utilize various alignment methods for guiding these models to generate compromises while maintaining adherence to specified constraints. According to various aspects of the present disclosure, fine-tuning of open source LLMs utilizing the disclosed empathetically neutral compromise dataset improves the generation performance on an automatic evaluation metric. This fine-tuned model is used for alignment training for further improvement. Various aspects of the present disclosure recognize that the disclosed alignment methods effectively preserve pre-trained knowledge while acquiring this skill. A process for compromise generation from divergent views is shown, for example, in FIGURE 7.

FIGURE 7 is a flowchart illustrating a method 700 for compromise generation from divergent views, according to aspects of the present disclosure. At block 702, a proprietary large language model (LLM) generates a synthetic dataset involving generated compromises between two points of view. For example, the various prompts provided in FIGURE 5A are input to LLMs for providing synthetic dataset generation. As shown in FIGURE 5A, with the help of sophisticated prompting strategies based on a task scenario, synthetic dataset generation provides an effective alternative to human data collection. As shown in FIGURE 5A, a chain of thoughts (CoT) process is utilized to identify suggestion similarities and derive compromises.

At block 704, a similarity model predicts empathy scores for positive viewpoints toward compromises and negative viewpoints toward compromises of the synthetic dataset. For example, as shown in FIGURE 6, during inference, the similarity model 640 receives an input 630, including ViewA, ViewB and each compromise from the generated compromises block 620. In response, the similarity model 640 predicts the empathic similarity between the generated each generated compromise 646 and ViewA (ScoreA 642) and ViewB (ScoreB 644).

At block 706, a dataset of empathetically neutral compromises is refined in response to a feedback process based on the empathy scores and the synthetic dataset. For example, as shown in FIGURE 6, for each iteration of the CoT and similarity model feedback process 600, both response quality and empathy similarity ratings improve. Because the similarity model 640 is trained to mimic human empathic similarity, this external feedback of empathy similarity scores is more valuable to the proprietary LLM 610 rather than the self-evaluation utilized in the CoT and LLM enhanced process 550 of FIGURE 5B. In some implementations, the CoT and similarity model feedback process 600 is repeated until the higher empathy similarity score (e.g., ViewA (ScoreA 642) and ViewB (ScoreB 644)) reaches a predetermined value.

At block 708, an open source LLM is aligned toward compromise generation capabilities utilizing the dataset of empathetically neutral compromises based on the refining. For example, an open source LLM may undergo fine-tuning and aligning using various different strategies: (1) noise contrastive estimation (NCE)-based alignment and (2) task metric-based objective. Models trained on this dataset via preference alignment demonstrated effective compromise generation across multiple metrics. Additionally, various aspects of the present disclosure provide a scalable approach to enhance social intelligence of LLMs through neutral conflict resolution, for example, as shown in FIGURES 4A-6.

The various operations of methods described above may be performed by any suitable means capable of performing the corresponding functions. The means may include various hardware and/or software component(s) and/or module(s), including, but not limited to, a circuit, an application-specific integrated circuit (ASIC), or processor. Generally, where there are operations illustrated in the figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database, or another data structure), ascertaining, and the like. Additionally, "determining" may include receiving (e.g., receiving information), accessing (e.g., accessing data in a memory), and the like. Furthermore, "determining" may include resolving, selecting, choosing, establishing, and the like.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various illustrative logical blocks, modules and circuits described in connection with the present disclosure may be implemented or performed with a processor configured according to the present disclosure, a digital signal processor (DSP), an ASIC, a field-programmable gate array signal (FPGA) or other programmable logic device (PLD), discrete gate or transistor logic, discrete hardware components, or any combination thereof designed to perform the functions described herein. The processor may be a microprocessor, but, in the alternative, the processor may be any commercially available processor, controller, microcontroller, or state machine specially configured as described herein. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read-only memory (ROM), flash memory, erasable programmable read-only memory (EPROM), electrically erasable programmable read-only memory (EEPROM), registers, a hard disk, a removable disk, a CD-ROM, and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a device. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may connect a network adapter, among other things, to the processing system via the bus. The network adapter may implement signal processing functions. For certain aspects, a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and processing, including the execution of software stored on the machine-readable media. Examples of processors that may be specially configured according to the present disclosure include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM, flash memory, ROM, programmable read-only memory (PROM), EPROM, EEPROM, registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the device, all which may be accessed by the processor through the bus interface. Alternatively, or in addition, the machine-readable media, or any portion thereof, may be integrated into the processor, such as the case may be with cache and/or specialized register files. Although the various components discussed may be described as having a specific location, such as a local component, they may also be configured in various ways, such as certain components being configured as part of a distributed computing system.

The processing system may be configured with one or more microprocessors providing the processor functionality and external memory providing at least a portion of the machine-readable media, all linked together with other supporting circuitry through an external bus architecture. Alternatively, the processing system may comprise one or more neuromorphic processors for implementing the neuron models and models of neural systems described herein. As another alternative, the processing system may be implemented with an ASIC with the processor, the bus interface, the user interface, supporting circuitry, and at least a portion of the machine-readable media integrated into a single chip, or with one or more FPGAs, PLDs, controllers, state machines, gated logic, discrete hardware components, or any other suitable circuitry, or any combination of circuits that can perform the various functions described throughout this present disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a special purpose register file for execution by the processor. When referring to the functionality of a software module below, it will be understood that such functionality is implemented by the processor when executing instructions from that software module. Furthermore, it should be appreciated that aspects of the present disclosure result in improvements to the functioning of the processor, computer, machine, or other system implementing such aspects.

If implemented in software, the functions may be stored or transmitted over as one or more instructions or code on a non-transitory computer-readable medium. Computer-readable media include both computer storage media and communication media, including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Additionally, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects, computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a CD or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes, and variations may be made in the arrangement, operation, and details of the methods and apparatus described above without departing from the scope of the claims.

## Claims

1. A method for compromise generation from divergent views, the method comprising:
generating, by a proprietary large language model (LLM), a synthetic dataset involving generated compromises between two points of view;
predicting, by a similarity model, empathy scores for positive viewpoints toward compromises and negative viewpoints toward compromises of the synthetic dataset;
refining a dataset of empathetically neutral compromises in response to a feedback process based on the empathy scores and the synthetic dataset; and
aligning an open source LLM toward compromise generation capabilities utilizing the dataset of empathetically neutral compromises based on the refining.

2. The method of claim 1, in which predicting the empathy scores comprises utilizing an empathy from perspectives (EFP) dataset based on empathy ratings of real persons with a positive viewpoint towards a negative story.

3. The method of claim 1, in which the two points of view comprises places evaluated as safe/less safe or welcoming/excluded.

4. The method of claim 1, in which predicting comprises estimating an empathy similarity score between the generated compromises and each of the two points of view.

5. The method of claim 1, in which refining comprises:
feeding-back a prompt to the proprietary LLM to create N better responses having a higher empathy similarity score relative to the empathy scores for positive viewpoints toward compromises and negative viewpoints toward compromises of the synthetic dataset; and
repeating the feeding-back until the higher empathy similarity score is greater than a predetermined value.

6. The method of claim 5, in which the N better comprises are scored according to a degree of consideration for both of the two points of view, and a degree of empathetic neutrality.

7. The method of claim 1, in which aligning comprises fine-tuning the open source LLM prior to aligning.

8. The method of claim 1, in which aligning comprises a task-metric alignment loss and/or a noise contrastive estimation (NCE) loss-based alignment between the open source LLM and the dataset of empathetically neutral compromises based on the refining.

9. A non-transitory computer-readable medium having program code recorded thereon for compromise generation from divergent views, the program code being executed by a processor and comprising:
program code to generate, by a proprietary large language model (LLM), a synthetic dataset involving generated compromises between two points of view;
program code to predict, by a similarity model, empathy scores for positive viewpoints toward compromises and negative viewpoints toward compromises of the synthetic dataset;
program code to refine a dataset of empathetically neutral compromises in response to a feedback process based on the empathy scores and the synthetic dataset; and
program code to align an open source LLM toward compromise generation capabilities utilizing the dataset of empathetically neutral compromises based on the program code to refine.

10. The non-transitory computer-readable medium of claim 9, in which the program code to predict the empathy scores comprises program code to utilize an empathy from perspectives (EFP) dataset based on empathy ratings of real persons with a positive viewpoint towards a negative viewpoint story.

11. The non-transitory computer-readable medium of claim 9, in which the two points of view comprise places evaluated as safe/less safe or welcoming/excluded.

12. The non-transitory computer-readable medium of claim 9, in which the program code to predict comprises program code to estimate an empathy similarity score between the generated compromises and each of the two points of view.

13. The non-transitory computer-readable medium of claim 9, in which the program code to refine comprises:
program code to feedback a prompt to the proprietary LLM to create N better responses having a higher empathy similarity score relative to the empathy scores for positive viewpoints toward compromises and negative viewpoints toward compromises of the synthetic dataset; and
program code to repeat the program code to feedback until the higher empathy similarity score is greater than a predetermined value.

14. The non-transitory computer-readable medium of claim 13, in which the N better comprises are scored according to a degree of consideration for both of the two points of view, and a degree of empathetic neutrality.

15. The non-transitory computer-readable medium of claim 9, in which the program code to align comprises program code to fine-tune the open source LLM prior to aligning.

16. The non-transitory computer-readable medium of claim 9, in which the program code to align comprises a task-metric alignment loss and/or a noise contrastive estimation (NCE) loss-based alignment between the open source LLM and the dataset of empathetically neutral compromises based on the program code to refine.

17. A system for compromise generation from divergent views, the system comprising:
a synthetic dataset generation model to generate, by a proprietary large language model (LLM), a synthetic dataset involving generated compromises between two points of view;
an empathy similarity score model to predict empathy scores for positive viewpoints toward compromises and negative viewpoints toward compromises of the synthetic dataset;
a neutral compromise dataset refinement module to refine a dataset of empathetically neutral compromises in response to a feedback process based on the empathy scores and the synthetic dataset; and
an alignment module to align an open source LLM toward compromise generation capabilities utilizing the dataset of empathetically neutral compromises once refined.

18. The system of claim 17, in which the neutral compromise dataset refinement module is further trained by feedback of a prompt to the proprietary LLM to create N better responses having a higher empathy similarity score relative to the empathy scores for positive viewpoints toward compromises and negative viewpoints toward compromises of the synthetic dataset, and to repeat the feedback until the higher empathy similarity score is greater than a predetermined value.

19. The system of claim 17, in which the open source LLM is fine-tuned prior to alignment.

20. The system of claim 17, in which the alignment module comprises a task-metric alignment loss and/or a noise contrastive estimation (NCE) loss-based alignment between the open source LLM and the dataset of empathetically neutral compromises once refined.
